# EUROPÄISCHE PATENTSCHRIFT

(11) **EP 1 347 194 B1**
(45) Veröffentlichungstag und Bekanntmachung des Hinweises auf die Patenterteilung: **20.07.2005**
(21) Anmeldenummer: 03005915.8
(22) Anmeldetag: 17.03.2003
(51) Int. Cl.: F16D 43/18

(54) **Separator mit Fliehkraftkupplung**
Separator with centrifugal clutch
Séparateur avec embrayage centrifuge

(30) Priorität: 22.03.2002 DE 20204557 U
(43) Veröffentlichungstag der Anmeldung: 24.09.2003
(73) Patentinhaber: Westfalia Separator AG, 59302 Oelde (DE)
(72) Erfinder: Mackel, Jürgen, 59302 Oelde (DE); Droste, Johannes, 48720 Rosendahl (DE)
(74) Vertreter: Specht, Peter, Dipl.-Phys.

(56) Entgegenhaltungen:
- DE-A- 1 575 921
- DE-A- 1 750 227
- FR-A- 1 368 330
- US-A- 2 338 476
- US-A- 2 543 873
- US-A- 4 387 580

## Beschreibung

Die Erfindung betrifft einen Separator mit einer Schleudertrommel und einer Antriebsvorrichtung, welche einen Antriebsmotor, insbesondere einen Elektromotor und eine dem Antriebsmotor nachgeschaltete Fliehkraftkupplung aufweist, welche vorzugsweise über ein Getriebe und/oder einen Riemenantrieb mit einer Antriebsspindel für die Schleudertrommel gekoppelt ist, wobei die Fliehkraftkupplung einen Innenringkörper und einen koaxial zu diesem angeordneten Außenringkörper aufweist, zwischen denen ein Ringspalt ausgebildet ist, und wobei der Innenringkörper an seinem Außenumfang mit Nuten versehen ist, in welchen jeweils mindestens ein Kupplungsklotzradial beweglich geführt ist.

Derartige Anordnungen sind an sich bekannt. So zeigt die DE 1 221 986 zwar keinen Separator, aber eine Schleudertrommel für eine Haushaltszentrifuge mit einer Kupplung, wobei der Innenringkörper an seinem Außenumfang mit Nuten versehen ist, in welchen jeweils mindestens ein Kupplungsklotz radial beweglich geführt ist. Der Außenringkörper besteht aus Kunststoff und wird durch die Kupplungsklötze im Betrieb deformiert. Die Kupplungskörper sind von Querstiften durchsetzt, welche zwar einerseits ein Ausfallen der Kupplungsklötze verhindern, andererseits aber verhindern, das diese Konstruktion auch bei sich kontinuierlich verschleißenden Kupplungsmaterialien einsetzbar ist, denn die Kupplungsklötze der DE 1 221 986 wirken eher durch Deformation als durch Abrieb.

Die DE 519 120 zeigt eine Fliehkraftkupplung für Schleudermaschinen, bei welcher Bremsklötze lose in einer Bremsscheibe liegen und neben der Treibscheibe eine Losscheibe sitzt, wobei die auf der Nabe der Bremsscheibe gelagerte Treibscheibe durch die Nabe der Losscheibe axial in ihrer Betriebsstellung gehalten wird.

Die FR 1368330 zeigt eine Kupplung für eine Waschmaschine, bei welcher zwischen dem Grund der Nut und dem Halteglied für den Kupplungsklotz eine Feder angeordnet ist, welche den Kupplungsklotz radial nach außen drückt. Hierbei ist zwischen dem Kupplungsklotz und der Feder ferner ein Gewichtsblock angeordnet.

Weitere Kupplungen für Zentrifugen sind aus der DE 886 129, der US 2,488,599 und der US 2,753967 bekannt.

Die Fliehkraftkupplung dient insbesondere dazu, während des Anlaufs des Separators den Motor zu entlasten, damit eine zu hohe Stromaufnahme am Motor vermieden wird.

Die gattungsgemäße Konstruktion hat sich an sich bewährt, denn sie baut kompakt und ermöglicht an sich in den meisten Fällen zufriedenstellend die Übertragung des Motordrehmomentes auf das Getriebe. Dennoch ist es wünschenswert, möglichst ohne eine Vergrößerung der Abmessungen der Fliehkraftkupplung die mit der Kupplung übertragbare Leistung zu erhöhen.

Die Lösung dieses Problems ist die Aufgabe der Erfindung,

Die Erfindung löst diese Aufgabe durch den Gegenstand des Anspruchs 1. Vorteilhafte Ausgestaltungen sind den Unteransprüchen zu entnehmen.

Hierbei wird bei einer konstanten Drehzahl der Reibschluß zwischen den Kupplungsklötzen und dem Innenumfang des Außenringkörpers - insbesondere ohne zusätzliche Feder - auf einfache konstruktive Weise verstärkt, so dass ein höheres Drehmoment übertragen kann, ohne dass die Abmessungen der Fliehkraftkupplung verändert werden müssen.

Zu diesem Zweck bestehen die Gewichtsblöcke besonders vorteilhaft aus einem Material, welches ein höheres spezifisches Gewicht hat als das Material der Kupplungsklötze. Besonders geeignet erscheint Stahl, insbesondere ein Flachstahl.

Nach der Erfindung sind die Nuten ferner derart ausgelegt und jeweils auf den wenigstens einen zugehörigen Gewichtsblock und den wenigstens einen zugehörigen Kupplungsklotz abgestimmt, dass ausschließlich die Kupplungsklötze bei Drehungen radial über den Außenumfang des Innenringkörpers vorstehen können. Derart werden Beschädigungen insbesondere des Innenumfanges des Außenringkörpers bei zunehmendem Verschleiß der Kupplungsklötze durch einen Kontakt zwischen den Gewichtsblöcken und dem Außenringkörper auf konstruktiv einfache Weise sicher vermieden. Hierin liegt ein erheblicher Vorteil der Erfindung.

Zweckmäßig verjüngen sich die Nuten von innen radial nach außen hin kontinuierlich oder diskontinuierlich zumindest abschnittsweise. Zweckmäßig weisen sie hierzu in axialer Richtung einen T- oder L-förmigen Querschnitt auf.

Der mindestens eine Gewichtsblock und der mindestens eine Kupplungsklotz sind vorzugsweise getrennt voneinander ausgebildet und nicht miteinander verbunden, was den großen Vorteil hat, dass nur die Kupplungsklötze nach entsprechendem Verschleiß gewechselt werden müssen, nicht aber die Gewichtsblöcke. Alternativ ist es auch denkbar, diese beiden Elemente miteinander zu verbinden.

Besonders vorteilhaft ist, daß durch die Anzahl und Auslegung der Gewichtsblöcke die mit der Fliehkraftkupplung übertragbare Leistung einstellbar ist.

Nachfolgend wird die Erfindung anhand von Ausführungsbeispielen unter Bezug auf die Zeichnung näher beschrieben. Es zeigt:
- Fig. 1: eine erste schematische Darstellung eines insbesondere für industrielle Anwendungen geeigneten Separators mit einem Antrieb, der eine Fliehkraftkupplung aufweist;
- Fig. 2a: eine Schnittansicht einer Fliehkraftkupplung für einen Separator;
- Fig. 2b: eine Ausschnittsvergrößerung aus Fig.2a;
- Fig. 3: eine erste, teilgeschnittene schematische Darstellung eines weiteren Separators mit einem Antrieb, der eine Fliehkraftkupplung aufweist;

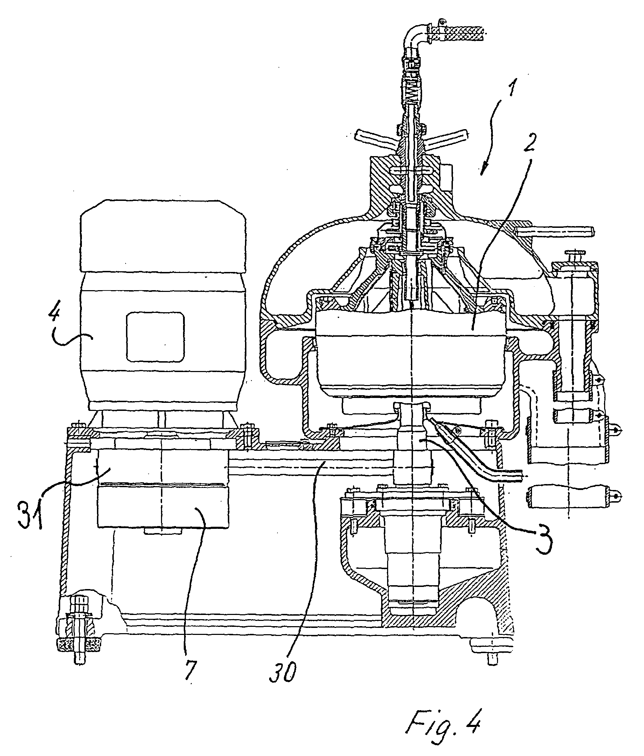

- Fig. 4: eine weitere schematische Darstellung des Separators aus Fig. 3.

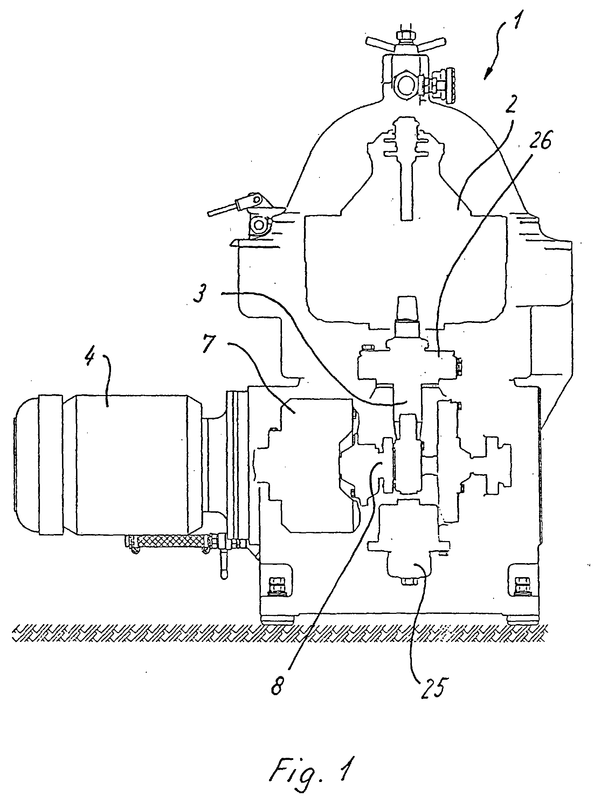

Fig. 1 zeigt einen Separator 1 mit einer Schleudertrommel 2, welche über eine Spindel 3 angetrieben wird, welche koaxial zur Drehachse der Schleudertrommel 2 angeordnet ist und hier senkrecht aus der Schleudertrommel 2 nach unten vorsteht.

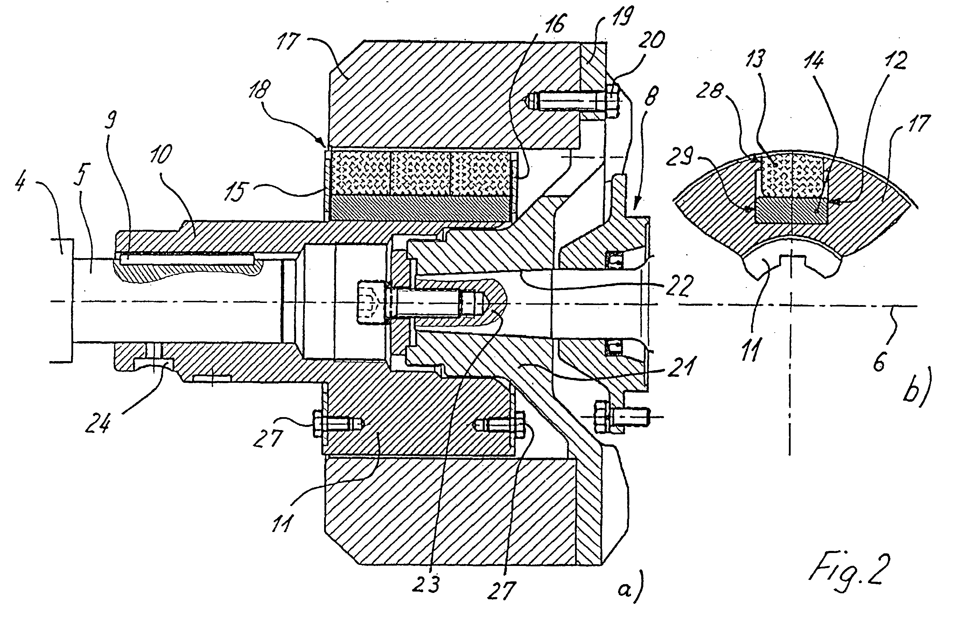

Das Drehen der Schleudertrommel ermöglicht eine Antriebsvorrichtung, die einen Elektromotor 4 aufweist, dessen Abtriebswelle 5 - siehe Fig. 2 - eine Drehachse 6 aufweist, welche senkrecht zur Drehachse der Schleudertrommel 2 ausgerichtet ist.

Die Abtriebswelle 5 ist mit der Eingangsseite einer Fliehkraftkupplung 7 der Antriebsvorrichtung gekoppelt, deren Ausgangsseite wiederum mit einem Getriebe 8 verbunden ist, welche zur Drehung der Spindel 3 ausgelegt ist. Ein erstes und ein zweites Lager 25, 26 an der Spindel 3 dienen zur Lagerung der Schleudertrommel 2 und der Spindel 3.

Wie in Fig. 2 weiter zu erkennen, greift die Abtriebswelle 5 mit ihrem freien Ende in eine Hohlwelle 10 an der Eingangsseite der Fliehkraftkupplung 7 ein.

Zwischen der Abtriebswelle 5 und der Hohlwelle 10 sind eine oder mehrere Passfedem 9 angeordnet. Zusätzlich können die Hohlwelle 10 und die Abtriebswelle 5 im Bereich einer Bohrung 24 in der Hohlwelle 10 über eine Schraube miteinander verbunden werden (hier nicht dargestellt).

An ihrem von der Abtriebswelle 5 abgewandten Ende vergrößert sich der Durchmesser der Hohlwelle 10 zu einem Innenringkörper 11, welcher innen ebenfalls hohl ausgebildet ist bzw. eine zentrische Bohrung aufweist.

Der Innenringkörper 11 ist an seinem Außenumfang mit wenigstens einer, vorzugsweise aber mehreren sich axial am Außenumfang erstreckenden Nuten 12 - z.B. Ausfräsungen - versehen, in welche jeweils wenigstens ein radial in der jeweiligen Nut beweglicher Kupplungsklotz 13 eingesetzt ist.

Zwischen dem inneren Grund der Nuten 12 und den hier beispielhaft drei Kupplungsklötzen 13 je Nut 12 ist ferner wenigstens ein ebenfalls radial beweglicher Gewichtsblock 14 angeordnet, der z.B. als Flachstahlelement ausgebildet sein kann.

An die beiden axialen Enden des Innenringkörpers 11 sind Ringscheiben 15, 16 angesetzt - hier mittels Schrauben 27 angeschraubt - welche die Nuten 12 axial verschliessen.

Der Innenringkörper 11 ist an seinem Außenumfang von einem Außenringkörper 17 umgeben, wobei zwischen dem Innenringkörper 11 und dem Außenringskörper 17 ein Spalt 18 besteht.

An das von der Abtriebswelle 5 abgewandte Ende des vorzugsweise nicht aus Kunststoff bestehenden und stabilen Außenringkörpers 17 ist ein Abtriebsring 19 mittels Schraubbolzen 20 angeschraubt, welcher einen topfartigen inneren Ansatz 21 aufweist, der mit einem Innenkonus 22 zur Aufnahme einer Welle 23 versehen ist, welche mit der Eingansseite des der Fliehkraftkupplung nachschalteten Getriebes 8 verbindbar ist.

Nachfolgend sei die Funktion der Fliehkraftkupplung 7 näher erläutert.

Bei Drehungen der Abtriebswelle 5 des Elektromotors 4 nimmt diese die Hohlwelle 10 und damit auch den an die Hohlwelle 10 einstückig angeformten Innenringkörper 11 mit. Durch die bei der Drehung wirkenden Fliehkräfte werden die radial am Innenringkörper beweglichen Kupplungsklötze 13 und die Gewichtsblöcke 14 jeweils in den Nuten 12 radial nach außen bewegt. Dabei legen sich die Kupplungsklötze 13 an den Innenumfang des Außenringkörpers 18 und nehmen diesen beim Überschreiten einer Grenzdrehzahl durch Reibschluß mit.

Die Gewichtsblöcke 14 bestehen aus einem schwereren Material als die Kupplungsklötze, d.h. aus einem Material mit einem größeren spezifischen Gewicht. Dies ermöglicht es, den Reibschluß zwischen den Kupplungsklötzen 13 und dem Innenumfang des Außenringskörpers zu erhöhen, d.h., die Fliehkraftkupplung 7 kann eine größere Antriebsleistung auf das Getriebe 8 übertragen als eine entsprechende Füehkraftkupplung 7 ohne Gewichtsblöcke 14.

Die Nuten 12 sind derart ausgelegt und jeweils auf den wenigstens einen zugehörigen Gewichtsblock 14 und den wenigstens einen zugehörigen Kupplungsklotz 13 abgestimmt, dass zwar jeweils die Kupplungsklötze 13 bei Drehungen radial über den Außenumfang des Innenringskörpers 10 vorstehen können, nicht aber die Gewichtsblöcke 14.

Dies wird dadurch erreicht, dass sich die z.B. als Ausfräsungen ausgebildeten Nuten 12 von innen radial nach außen hin kontinuierlich oder diskontinuierlich - z.B. gestuft - zumindest abschnittsweise verjüngen.

Dabei weisen die Kupplungsklötze 13 in Umfangsrichtung des Innenringkörpers 11 zur Realisierung der Funktion der Fliehkraftkupplung 7 eine geringere Breite auf als die Nuten 12 des Innenringkörpers 11. Die Gewichtsblöcke 14 weisen dagegen eine größere Breite auf als die Nuten 12 am Außenumfang des Innenringkörpers 11. Die Gewichtsblöcke 14 können sich daher zwar in den Nuten 12 radial bewegen, sie können aber nicht über den Außenumfang des Innenringkörpers 11 nach außen vorstehen und den Außenringkörper 18 an seinem Innenumfang z.B. durch ein Anschleifen beschädigen.

Beispielhaft sind die Nuten in Fig. 2 im Querschnitt T-förmig ausgebildet, wobei die Längsschenkel 28 der T-förmigen Nuten 12 nach außen hin weisen und die Grundschenkel 29 der T-förmigen Nuten jeweils den Aufnahmeraum und radialen Bewegungsraum für die Gewichtsblöcke 14 bilden. Der wenigstens eine Gewichtsblock 14 weist einen der Breite des Grundschenkels 29 in Umfangsrichtung des T angepassten Querschnitt auf, d.h., er ist in Umfangsrichtung breiter als der Grundschenkel 29 und schmaler als der Längsschenkel 28.

Damit ist er zwar im Grundschenkel 29 radial beweglich geführt, er kann aber nicht in den Längsschenkel 28 eingreifen und bei Drehungen bis zum Außenumfang der Nuten 12 gelangen. Die Kupplungsklötze 13 sind dagegen derart bemessen, dass sie in den Längsschenkeln 28 der Nuten 12 verschieblich geführt sind. Die Kupplungsklötze 13 bestehen aus einem im Betrieb verschleißenden Material.

Beispielhaft, wird die T-förmige Nut derart bemessen, dass nach einem Verschleiß von 2/3 des Reibmaterials der Kupplungsklötze 13 der als Flachstahl ausgebildete Gewichtsblock an die Längsschenkel stößt und nicht weiter nach außen gelangen kann.

Mit der Anordnung aus Fig. 2 ist es möglich, bei entsprechender Dimensionierung z.B. die Antriebsleistung eines vierpoligen Motors von 25kW zu übertragen.

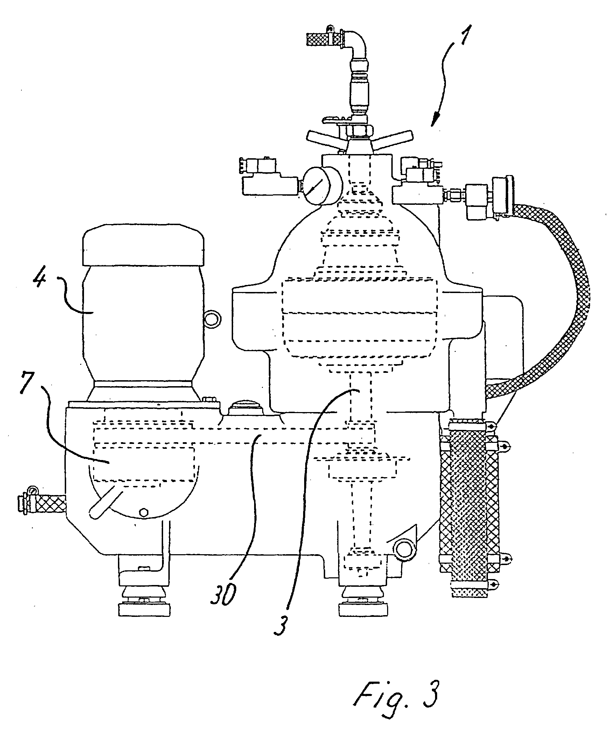

Fig. 3 zeigt einen Separator 1, dessen Antriebsvorrichtung einen Elektromotor 4 aufweist, dessen Abtriebswelle parallel zur Trommeldrehachse und zur Spindel 3 ausgerichtet ist. Die Fliehkraftkupplung 7 ist auf die Abtriebswelle aufgesetzt und weist dabei eine Drehachse auf, die ebenfalls parallel zur Drehachse der Spindel 3 ausgerichtet ist. An der Antriebsseite der Kupplung am Ring 17 ist eine Riemenscheibe 31 befestigt, die über einen Riemenantrieb 30 die Antriebsleistung auf die Spindel überträgt.

### Bezugszeichen

- Separator: 1
- Schleudertrommel: 2
- Spindel: 3
- Elektromotor: 4
- Abtriebswelle: 5
- Drehachse: 6
- Fliehkraftkupplung: 7
- Getriebe: 8
- Passfedern: 9
- Hohlwelle: 10
- Innenringkörper: 11
- Bohrung: 12
- Kupplungsklotz: 13
- Gewichtsblock: 14
- Ringscheiben: 15, 16
- Außenringkörper: 17
- Spalt: 18
- Abtriebsring: 19
- Schraubbolzen: 20
- Ansatz: 21
- Innenkonus: 22
- Welle: 23
- Bohrung: 24
- Lager: 25, 26
- Schrauben: 27
- Längsschenkel: 28
- Grundschenkel: 29
- Riemenantrieb: 30

## Patentansprüche

1. Separator mit
a) einer Schleudertrommel (2) und
b) einer Antriebsvorrichtung, welche einen Antriebsmotor (4), insbesondere einen Elektromotor und eine dem Antriebsmotor nachgeschaltete Fliehkraftkupplung (7) aufweist, welche vorzugsweise über ein Getriebe (8) und/oder einen Riemenantrieb (30) mit einer Antriebsspindel (3) für die Schleudertrommel (2) gekoppelt ist,
c) wobei die Fliehkraftkupplung (7) einen Innenringkörper (11) und einen koaxial zu diesem angeordneten Außenringkörper (17) aufweist, zwischen denen ein Ringspalt (18) ausgebildet ist, und
d) wobei der Innenringkörper (11) an seinem Außenumfang mit Nuten (12) versehen ist, in welchen jeweils mindestens ein Kupplungsklotz (13) radial beweglich geführt ist,
e) jeweils zwischen dem Grund der Nut (12) und dem mindestens einen Kupplungsklotz (13) ein Gewichtsblock (14) angeordnet ist,
**dadurch gekennzeichnet, dass**
f) die Nuten (12) derart ausgelegt und jeweils auf den wenigstens einen zugehörigen Gewichtsblock (14) und den wenigstens einen zugehörigen Kupplungsklotz (13) abgestimmt sind, dass ausschließlich die Kupplungsklötze (13) bei Drehungen radial über den Außenumfang des Innenringskörpers (10) vorstehen können.

2. Separator nach Anspruch 1, **dadurch gekennzeichnet, dass** sich die Nuten (12) von innen radial nach außen hin kontinuierlich oder diskontinuierlich zumindest abschnittsweise verjüngen.

3. Separator nach Anspruch 2, **dadurch gekennzeichnet, dass** die Nuten (12) einen T-förmigen Querschnitt aufweisen.

4. Separator nach Anspruch 3, **dadurch gekennzeichnet, dass** die Nuten (12) einen L-förmigen Querschnitt aufweisen.

5. Separator nach Anspruch 3, **dadurch gekennzeichnet, dass** die Längsschenkel (28) der T-förmigen Nuten (12) nach außen hin weisen und die Grundschenkel (29) der T-förmigen Nuten jeweils eine Aufnahme und einen radialen Bewegungsraum für die Gewichtsblöcke (14) bilden.

6. Separator nach einem der vorstehenden Ansprüche, **dadurch gekennzeichnet, dass** der jeweils wenigstens eine Gewichtsblock (14) einen der Breite des Grundschenkels (29) in Umfangsrichtung des T derart angepassten Querschnitt aufweist, dass er in radialer Richtung im Grundschenkel (29) beweglich ist und dass er in Umfangsrichtung breiter ist als der Längsschenkel (28).

7. Separator nach einem der vorstehenden Ansprüche, **dadurch gekennzeichnet, dass** die Kupplungsklötze (13) derart bemessen sind, dass sie in den Längsschenkeln (28) der Nuten (12) verschieblich geführt sind.

8. Separator nach einem der vorstehenden Ansprüche, **dadurch gekennzeichnet, dass** die Kupplungsklötze (13) aus einem im Betrieb verschleißenden Material bestehen.

9. Separator nach einem der vorstehenden Ansprüche, **dadurch gekennzeichnet, daß** die Drehachse der Fliehkraftkupplung senkrecht zu einer Spindel (3) für die Schleudertrommel (3) ausgerichtet ist.

10. Separator nach einem der vorstehenden Ansprüche, **dadurch gekennzeichnet, daß** die Drehachse der Fliehkraftkupplung parallel zu einer Spindel (3) für die Schleudertrommel (3) ausgerichtet ist.

11. Separator nach einem der vorstehenden Ansprüche, **dadurch gekennzeichnet, daß** der mindestens eine Gewichtsblock (14) aus einem Material besteht, welches ein höheres spezifisches Gewicht aufweist als das Material des mindestens einen Kupplungsklotzes (13).

12. Separator nach einem der vorstehenden Ansprüche, **dadurch gekennzeichnet, daß** der mindestens eine Gewichtsblock (14) und der Kupplungsklotz (13) getrennt voneinander ausgebildet sind.

13. Separator nach einem der vorstehenden Ansprüche, **dadurch gekennzeichnet, daß** der mindestens eine Gewichtsblock (14) und der Kupplungsklotz (13) miteinander verbunden sind.

14. Separator nach einem der vorstehenden Ansprüche, **dadurch gekennzeichnet, daß** durch die Anzahl und Auslegung der Gewichtsblöcke die mit der Fliehkraftkupplung übertragbare Leistung einstellbar ist.

## Claims

1. Separator having
a) a centrifugal drum (2) and
b) a drive device which has a drive motor (4), in particular an electric motor, and a centrifugal clutch (7) which is connected in series with the drive motor and which is coupled to a drive spindle (3) for the centrifugal drum (2), preferably via a gear unit (8) and/or a belt drive (30),
c) the centrifugal clutch (7) having an inner annular body (11) and an outer annular body (17) arranged coaxially to the latter, between which an annular gap (18) is formed, and
d) the inner annular body (11), at its outer circumference, being provided with slots (12) in which at least one respective clutch block (13) is guided in a radially movable manner,
e) a weight block (14) is arranged in each case between the base of the slot (12) and the at least one clutch block (13),
**characterized in that**
f) the slots (12) are designed in such a way and matched in each case to the at least one associated weight block (14) and the at least one associated clutch block (13) in such a way that only the clutch blocks (13) can project radially beyond the outer circumference of the inner annular body (10) during rotations.

2. Separator according to Claim 1, **characterized in that** at least sections of the slots (12) narrow radially outwards from the inside continuously or discontinuously.

3. Separator according to Claim 2, **characterized in that** the slots (12) have a T-shaped cross section.

4. Separator according to Claim 3, **characterized in that** the slots (12) have an L-shaped cross section.

5. Separator according to Claim 3, **characterized in that** the longitudinal legs (28) of the T-shaped slots (12) point outwards, and the base legs (29) of the T-shaped slots in each case form a receptacle and a radial motion space for the weight blocks (14).

6. Separator according to one of the preceding claims, **characterized in that** the in each case at least one weight block (14) has a cross section adapted to the width of the base leg (29) in the circumferential direction of the T in such a way that it is movable in the radial direction in the base leg (29) and that it is wider in the circumferential direction than the longitudinal leg (28).

7. Separator according to one of the preceding claims, **characterized in that** the clutch blocks (13) are dimensioned in such a way that they are displaceably guided in the longitudinal legs (28) of the slots (12).

8. Separator according to one of the preceding claims, **characterized in that** the clutch blocks (13) are made of a material which wears in operation.

9. Separator according to one of the preceding claims, **characterized in that** the rotation axis of the centrifugal clutch is oriented perpendicularly to a spindle (3) for the centrifugal drum (2).

10. Separator according to one of the preceding claims, **characterized in that** the rotation axis of the centrifugal clutch is oriented parallel to a spindle (3) for the centrifugal drum (2).

11. Separator according to one of the preceding claims, **characterized in that** the at least one weight block (14) is made of a material which has a higher specific weight than the material of the at least one clutch block (13).

12. Separator according to one of the preceding claims, **characterized in that** the at least one weight block (14) and the clutch block (13) are designed to be separate from one another.

13. Separator according to one of the preceding claims, **characterized in that** the at least one weight block (14) and the clutch block (13) are connected to one another.

14. Separator according to one of the preceding claims, **characterized in that** the output which can be transmitted with the centrifugal clutch can be set by the number and design of the weight blocks.

## Revendications

1. Séparateur ayant :
a) un panier centrifuge (2) et
b) un dispositif d'entraînement, qui comprend un moteur d'entraînement (4), en particulier un moteur électrique et un embrayage centrifuge (7) intercalé à la suite du moteur électrique, qui est de préférence couplé à une broche d'entraînement (3) pour le panier centrifuge (2) au moyen d'un engrenage (8) et/ou d'un entraînement à courroie (30) ;
c) où l'embrayage centrifuge (7) comprend un corps annulaire intérieur (11) et un corps annulaire extérieur (17) agencé de façon coaxiale avec celui-ci, entre lesquels est ménagée une fente annulaire (18) ; et
d) où le corps annulaire intérieur (11) est muni sur sa circonférence extérieure de rainures (12), dans chacune desquelles au moins un bloc de couplage (13) est inséré de façon mobile dans le sens radial ;
e) où un bloc d'équilibrage (14) est agencé à chaque fois entre le fond de la rainure (12) et l'au moins un bloc de couplage (13) ;
**caractérisé en ce que** :
f) les rainures (12) sont conçues et adaptées chacune à l'au moins un bloc d'équitibrage (14) correspondant et à l'au moins un bloc de couplage (13) correspondant de telle sorte que seuls les blocs de couplage (13) peuvent faire saillie dans le sens radial au-delà de la circonférence extérieure du corps annulaire intérieur (10) en cas de rotations.

2. Séparateur selon la revendication 1, **caractérisé en ce que** les rainures (12) se rétrécissent au moins par endroits, de façon continue ou discontinue, depuis l'intérieur dans le sens radial en direction de l'extérieur.

3. Séparateur selon la revendication 2, **caractérisé en ce que** les rainures (12) présentent une section en forme de T.

4. Séparateur selon la revendication 3, **caractérisé en ce que** les rainures (12) présentent une section en forme de L,

5. Séparateur selon la revendication 3, **caractérisé en ce que** les ailes longitudinales (28) des rainures (12) en forme de T sont orientées en direction de l'extérieur et les ailes de fond (29) des rainures en forme de T forment respectivement un logement et un espace de mouvement radial pour les blocs d'équilibrage (14).

6. Séparateur selon l'une des revendications précédentes, **caractérisé en ce que** l'au moins un bloc d'équilibrage (14) présente respectivement une section adaptée à la largeur de l'aile de fond (29) dans le sens du périmètre du T, de telle sorte qu'il est mobile dans l'aile de fond (29) dans le sens radial et qu'il est plus large que l'aile longitudinale (28) dans le sens périphérique.

7. Séparateur selon l'une des revendications précédentes, **caractérisé en ce que** les blocs de couplage (13) sont dimensionnés de telle sorte qu'ils sont insérés dans les ailes longitudinales (28) des rainures (12) de façon coulissante.

8. Séparateur selon l'une des revendications précédentes, **caractérisé en ce que** les blocs de couplage (13) sont réalisés dans un matériau s'usant à l'utilisation.

9. Séparateur selon l'une des revendications précédentes, **caractérisé en ce que** l'axe de rotation de l'embrayage centrifuge est orienté perpendiculairement à une broche (3) pour le panier centrifuge (2).

10. Séparateur selon l'une des revendications précédentes, **caractérisé en ce que** l'axe de rotation de l'embrayage centrifuge est orienté parallèlement à une broche (3) pour le panier centrifuge (2).

11. Séparateur selon l'une des revendications précédentes, **caractérisé en ce que** l'au moins un bloc d'équilibrage (14) est réalisé dans un matériau qui possède un poids spécifique plus élevé que le matériau de l'au moins un bloc de couplage (13).

12. Séparateur selon l'une des revendications précédentes, **caractérisé en ce que** l'au moins un bloc d'équilibrage (14) et le bloc de couplage (13) sont réalisés séparément l'un de l'autre.

13. Séparateur selon l'une des revendications précédentes, **caractérisé en ce que** l'au moins un bloc d'équilibrage (14) et le bloc de couplage (13) sont reliés l'un à l'autre.

14. Séparateur selon l'une des revendications précédentes, **caractérisé en ce que** la puissance pouvant être transmise par l'embrayage centrifuge peut être réglée au moyen du nombre et de la disposition des blocs d'équilibrage.
